# EUROPÄISCHE PATENTANMELDUNG

(11) **EP 1 122 122 A1**
(43) Veröffentlichungstag der Anmeldung: **08.08.2001**
(21) Anmeldenummer: 01101857.9
(22) Anmeldetag: 26.01.2001
(51) Int. Cl.: B60N 2/48, B60N 2/427

(54) **Kopfstütze für einen Fahrzeugsitz**

(30) Priorität: 03.02.2000 DE 10004766
(71) Anmelder: Keiper GmbH & Co., 67657 Kaiserslautern (DE)
(72) Erfinder: Kreuels, Olaf, 66482 Zweibrücken (DE); Jung, Thomas, 67753 Aschbach (DE); Berberich, Andreas, 66849 Landstuhl (DE); Schäfer, Volker, 67731 Otterbach (DE); Braun, Dieter, 67697 Otterberg (DE); Baumann, Peter, 67659 Kaiserslautern (DE)
(74) Vertreter: Patentanwälte Hosenthien-Held und Dr. Held

(57) **Zusammenfassung**

Bei einer Kopfstütze (1) für einen Fahrzeugsitz, insbesondere für einen Kraftfahrzeugsitz, mit einer Kopfstützenstange (3), welche einen Kopfstützenkörper (5) trägt, bewegt sich im Crashfall ein Teil (12) des Kopfstützenkörpers (5) relativ zu dem übrigen Kopfstützenkörper (5) nach vorne.

## Beschreibung

Die Erfindung betrifft eine Kopfstütze für einen Fahrzeugsitz, insbesondere für einen Kraftfahrzeugsitz, mit den Merkmalen des Oberbegriffs des Anspruches 1.

Bei bekannten Kopfstützen dieser Art wird die Kopfstütze in einer bestimmten Höhe und mit einer bestimmten Neigung eingestellt. Falls der Abstand zwischen dem Kopf des Sitzbenutzers und der Kopfstütze zu groß eingestellt ist, kann der Sitzbenutzer im Falle eines Crashs ein Schleudertrauma (HWS-Syndrom) erleiden.

Der Erfindung liegt die Aufgabe zu Grunde, eine Kopfstütze der eingangs genannten Art zu verbessern, insbesondere hinsichtlich ihrer Crasheigenschaften. Diese Aufgabe wird erfindungsgemäß durch eine Kopfstütze mit den Merkmalen des Anspruches 1 gelöst. Vorteilhafte Ausgestaltungen sind Gegenstand der Unteransprüche.

Der Kopfstützenkörper wird im Falle eines Heckcrashs zusammen mit dem Fahrzeug nach vorne beschleunigt. Dadurch, daß sich im Crashfall, insbesondere im Falle eines Heckcrashs, ein Teil des Kopfstützenkörpers relativ zu dem übrigen Kopfstützenkörper nach vorne bewegt, kommt das Polster der Kopfstütze so nah wie möglich an den Kopf des Sitzbenutzers heran. Dies schützt den Sitzbenutzer besser vor Verletzungen, insbesondere vor dem sogenannten HWS-Syndrom. Besonders wichtig wird dies, wenn die Rückenlehne als Ganzes stark nach hinten geneigt ist. Die Erfindung kann bei allen Arten von Fahrzeugsitzen eingesetzt werden, beispielsweise bei Kraftfahrzeug-Vordersitzen oder -Rücksitzbänken oder bei Fluggastsitzen. Die Kopfstütze kann entsprechend auch für den Fall eines Frontcrashs ausgebildet werden.

In einer bevorzugten Ausführungsform verharrt im Crashfall eine im hinteren Teil der Kopfstütze integrierte Masse aufgrund ihrer Trägheit in ihrem Bewegungszustand und öffnet dadurch die Verriegelung des crashaktiven Kopfstützensystems. Die Masse kann auch an einer anderen Stelle vorgesehen sein und über entsprechende Übertragungselemente mit der Verriegelung in der Kopfstütze verbunden sein. Federn können im Crashfall den vorderen Teil der Kopfstütze bewegen. Die Verriegelung kann nach einem Crash vorzugsweise wieder geschlossen werden, so daß die Kopfstütze wieder in ihren Ausgangszustand gebracht werden kann.

Sollte von hinten eine Person auf die Kopfstütze fallen oder schlagen, wird dadurch die Verriegelung nicht gelöst, sondern bleibt im verriegelten Zustand. Mißbrauch ist soweit unterbunden. Dynamische Belastungen, beispielsweise durch Fahrbahnunebenheiten, können die Verriegelung ebenfalls nicht auslösen.

In einer bevorzugten Ausführungsform ist die Kopfstütze in ihrer Neigung einstellbar und im Crashfall ändert sich die Neigung. Dadurch kann der Kopfstützenkörper seine Neigung besser der Kopfposition anpassen. Vorzugsweise wird der Kopfstützenkörper durch einen Kraftschluß gehalten, der von den Federn zur Bewegung des nach vorne beweglichen Teiles des Kopfstützenkörpers aufgebracht wird und der sich im Crashfall verringert.

Schwenkbewegungen, beispielsweise der auslösenden Masse und/oder des nach vorne beweglichen Teiles des Kopfstützenkörpers, haben den Vorteil, daß für die beweglichen Bauteile keine spezielle Führung vorgesehen werden muß, so daß sich die Herstellungskosten verringern. Dies gilt auch für die Verringerung der Anzahl der Bauteile, beispielsweise wenn Teile der Verriegelung an der Masse angebracht sind, vorzugsweise einstückig mit ihr ausgebildet sind. Die Masse kann auch getrennt von der Verriegelung ausgebildet sein.

Der bewegliche Teil des Kopfstützenkörpers kann aber beispielsweise auch so ausgebildet sein, daß er eine rein translatorische Bewegung, eine Überlagerung einer translatorischen und einer Schwenkbewegung oder eine Überlagerung zweier Schwenkbewegungen durchführt. In letzterem Fall kann beispielsweise mittels eines Viergelenks eine schräge Bewegung oder mittels Gleitführungen wieder eine translatorische Bewegung erzeugt werden. Für solche Schwenkbewegungen sind Hebel von Vorteil, mit denen dann verhältnismäßig große Wege zurückgelegt werden können.

Die erfindungsgemäße Kopfstütze kann Teil eines automatischen Kopfstützen-Anpassungs-Systems sein, d.h. die Höhe der Kopfstütze wird automatisch über die Längseinstellung des Fahrzeugsitzes grob voreingestellt. In der hintersten Position des Fahrzeugsitzes nimmt die Kopfstütze ihre höchste Stellung ein, in der vordersten Position ihre niedrigste Stellung. Die Höhe der Kopfstütze kann durch eine manuelle Höheneinstellung nachreguliert werden.

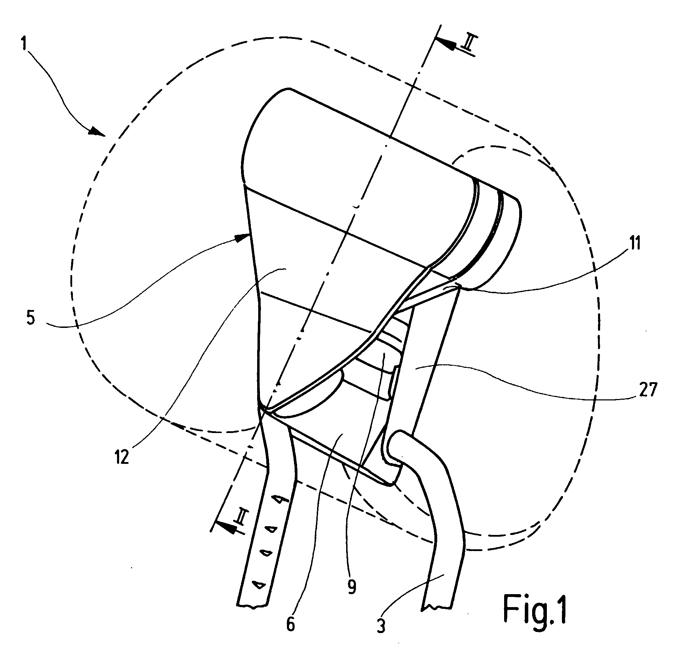

Im folgenden ist die Erfindung anhand von vier in der Zeichnung dargestellten Ausführungsbeispielen näher erläutert. Es zeigen
- Fig. 1: eine perspektivische Ansicht einer ersten erfindungsgemäßen Kopfstütze mit schematisch angedeutetem Polster, wobei die Kopfstütze sich im Gebrauchszustand befindet,

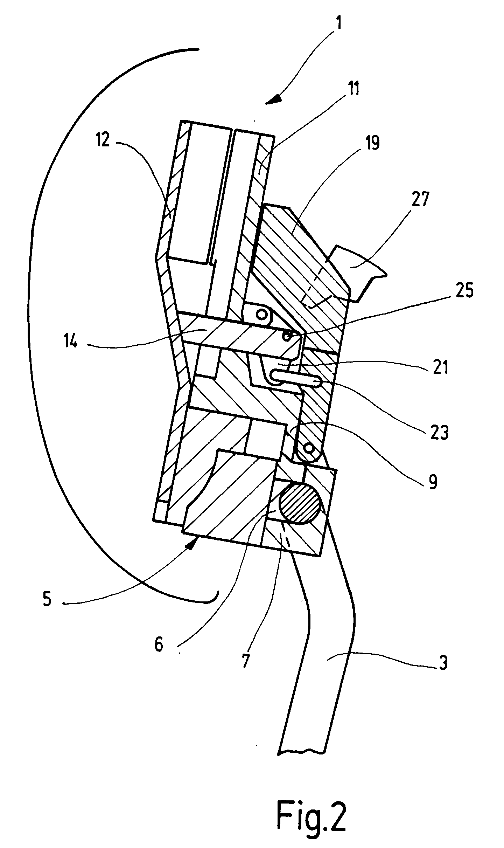

- Fig. 2: einen Schnitt entlang der Linie II-II in Fig. 1,

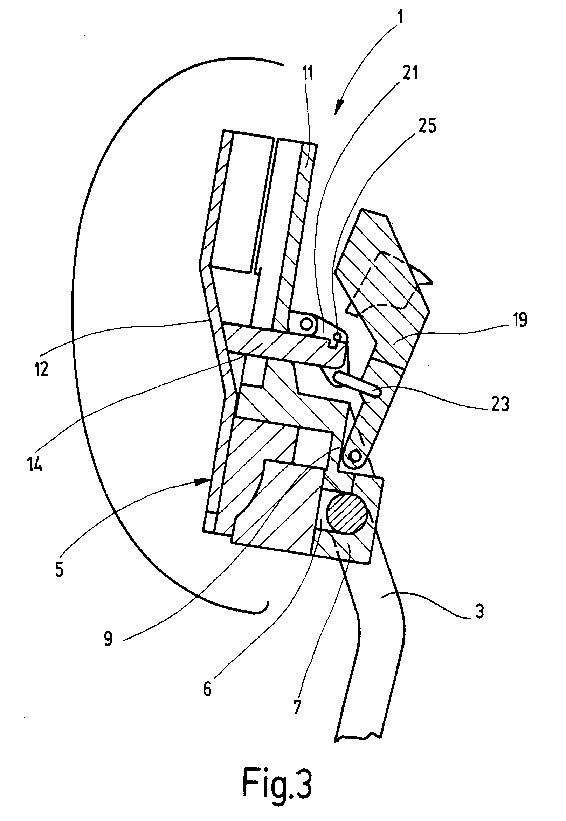

- Fig. 3: einen Schnitt entsprechend Fig. 2 in einem Zustand, in welchem der Entriegelungshebel aufgrund eines Heckcrashs nach hinten schwenkt,

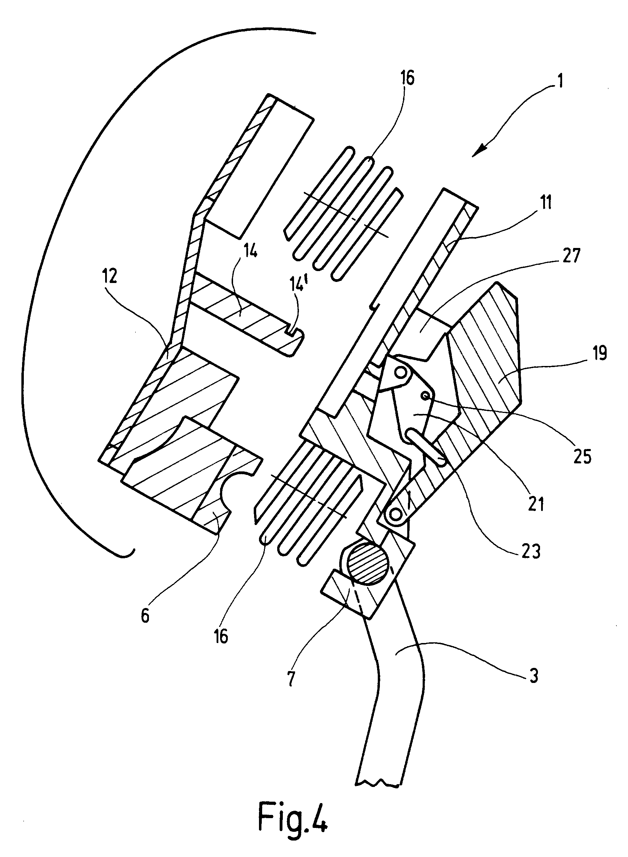

- Fig. 4: einen Schnitt entsprechend Fig. 2 in einem Zustand, in welchem die Federn die vordere Platte nach vorne bewegt haben und der übrige Kopfstützenkörper nach hinten geschwenkt ist,

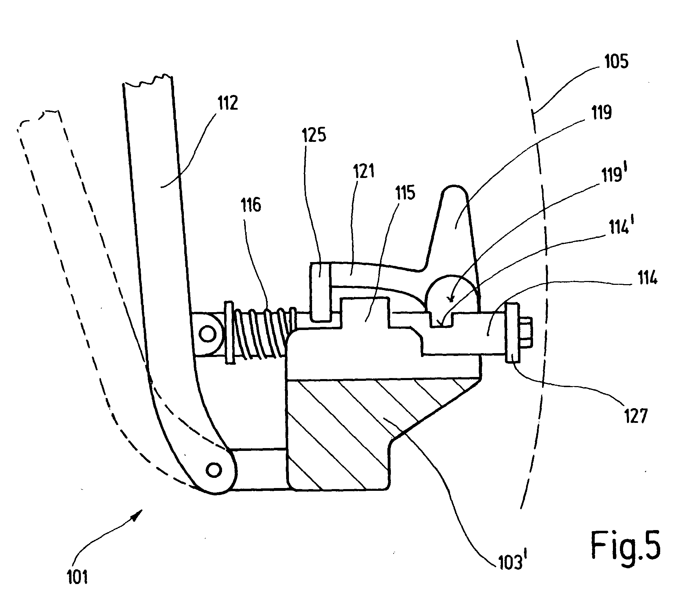

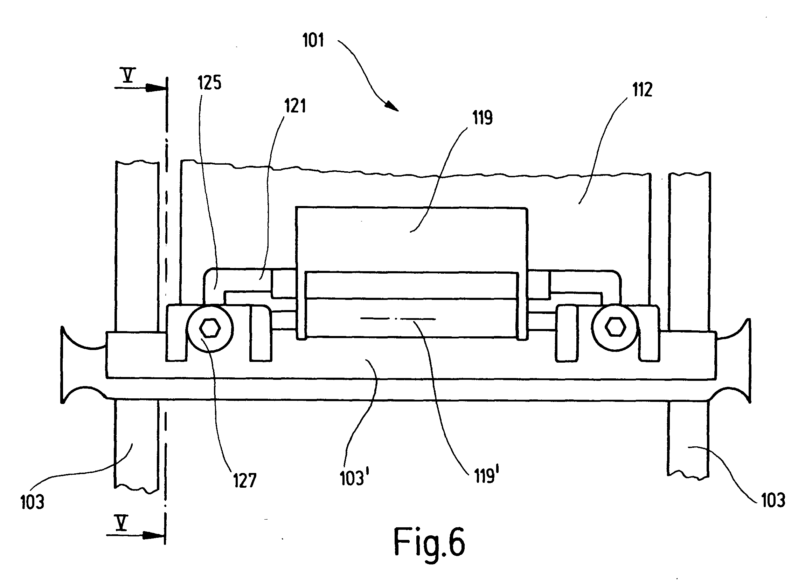

- Fig. 5: eine schematische, teilweise entlang der Linie V-V in Fig. 6 geschnittene Seitenansicht eines Teiles des zweiten Ausführungsbeispiels im Gebrauchszustand, wobei die Stellung des Prallkörpers im Crashfall durch eine gebrochen gezeichnete Linie dargestellt ist,
- Fig. 6: eine Rückansicht des in Fig. 5 dargestellten Teiles des zweiten Ausführungsbeispiels,

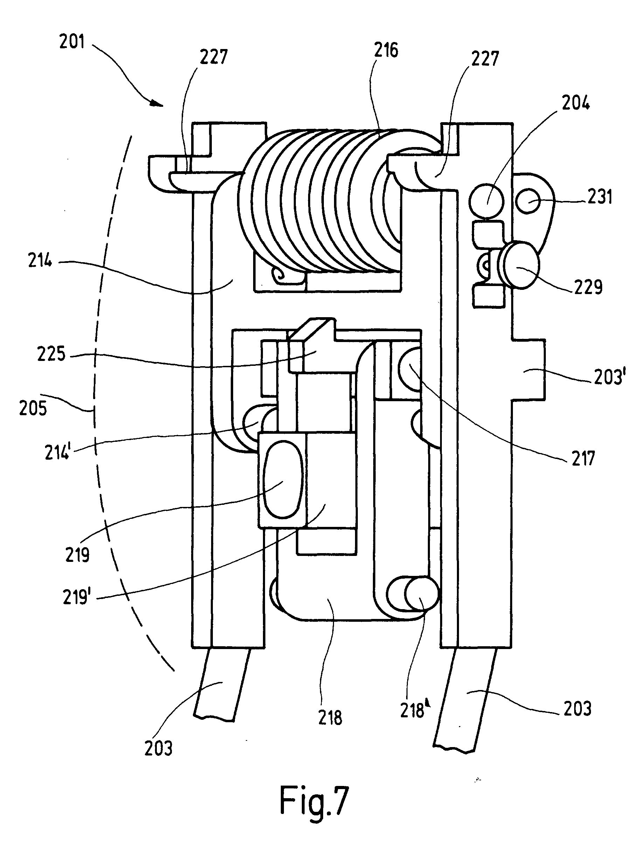

- Fig. 7: eine schematische, perspektivische Ansicht eines ohne Prallkörper dargestellten Teiles des dritten Ausführungsbeispiels im Gebrauchszustand,

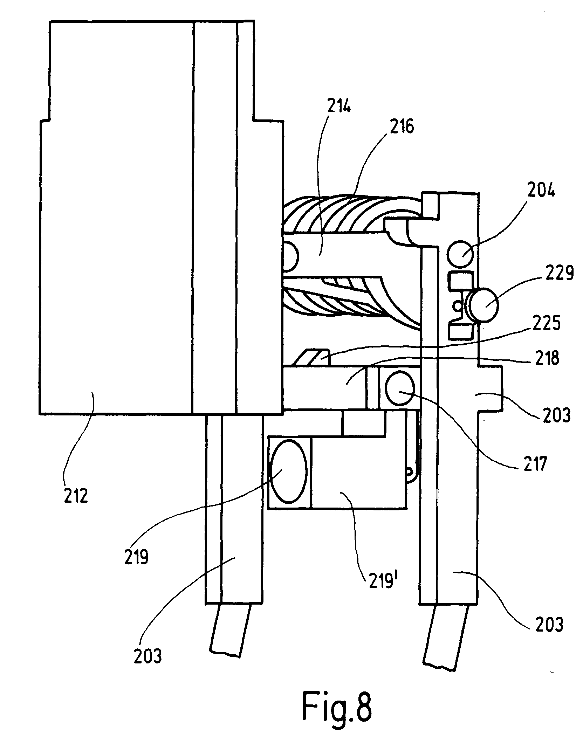

- Fig. 8: eine Ansicht wie in Fig. 7 mit Darstellung des Prallkörpers nach erfolgtem Heckcrash,
- Fig. 9: eine Seitenansicht des Verriegelungshebels aus Fig. 7 und 8 mit angedeuteter Auslösemasse und Rückstellfeder,

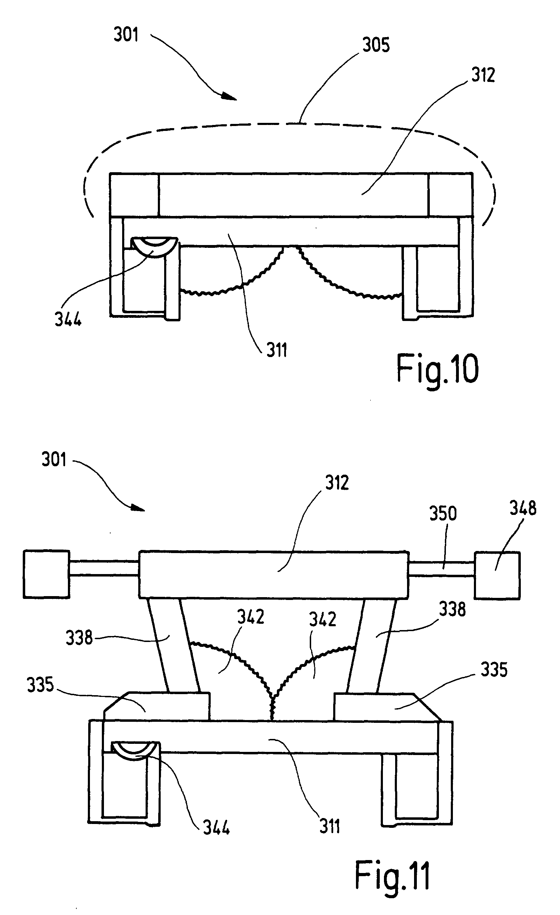

- Fig. 10: eine nur mit angedeuteter Polsterung dargestellte Draufsicht auf das vierte Ausführungsbeispiel im Gebrauchszustand,
- Fig. 11: eine Draufsicht wie in Fig. 10 nach erfolgtem Heckcrash,

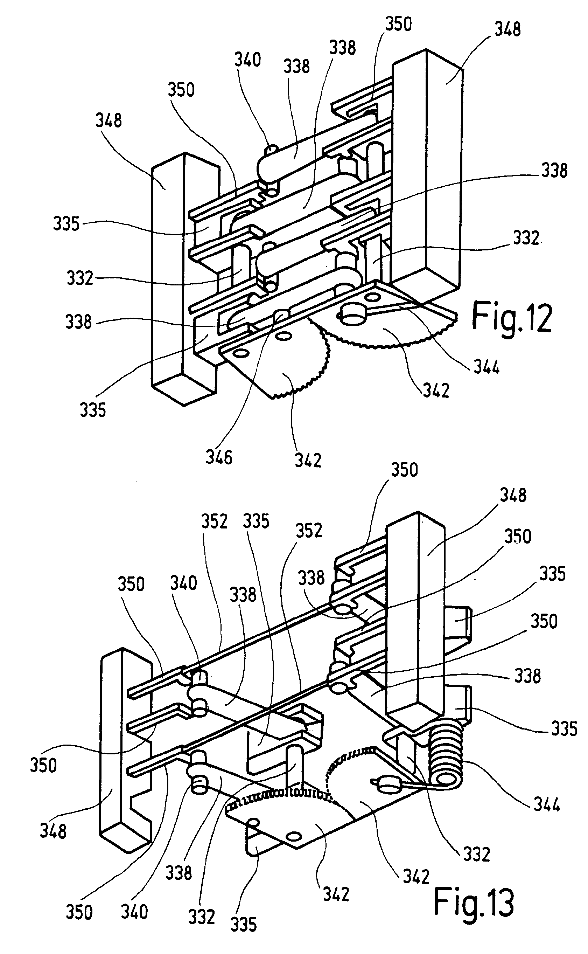

- Fig. 12: eine perspektivische Ansicht des im vierten Ausführungsbeispiel enthaltenen Hebelsystems im Gebrauchszustand mit Blickrichtung von schräg unten,
- Fig. 13: eine Ansicht wie in Fig. 12 nach erfolgtem Heckcrash,

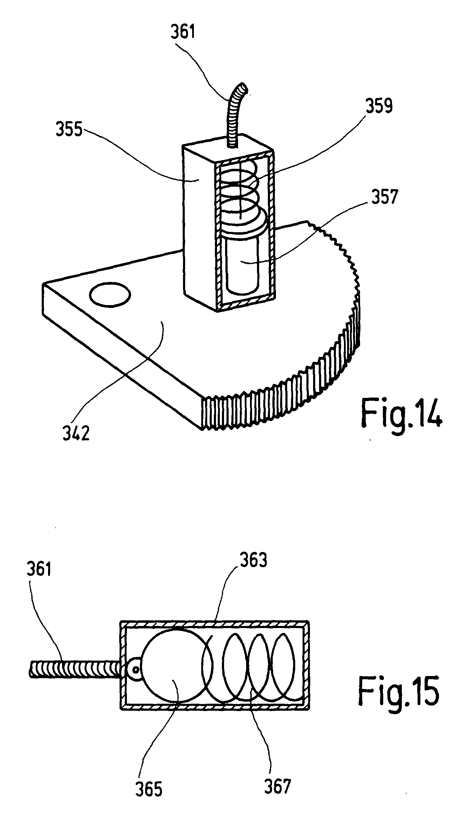

- Fig. 14: eine perspektivische, teilweise geschnitten dargestellte Ansicht der Verriegelung des vierten Ausführungsbeispiels, und
- Fig. 15: eine teilweise geschnitten dargestellte Seitenansicht des Massensensors des vierten Ausführungsbeispiels.

Im ersten Ausführungsbeispiel weist eine Kopfstütze 1 für einen Fahrzeugsitz eine U-förmig gebogene Kopfstützenstange 3 auf. Die nachfolgenden Richtungsangaben beziehen sich auf die Anordnung des Fahrzeugsitzes in einem Kraftfahrzeug und dessen gewöhnliche Fahrtrichtung. Die vertikal nach unten weisenden Endabschnitte der Kopfstützenstange 3 sind in Aufnahmen des Fahrzeugsitzes gesteckt. Am horizontal verlaufenden Mittelabschnitt ist ein gepolsterter Kopfstützenkörper 5 angeordnet. Der Kopfstützenkörper 5 weist eine vordere Klemmschale 6 und eine hintere Klemmschale 7 auf, deren halbzylindrisch gewölbte Innenprofile dem zylindrischen Profil der Kopfstützenstange 3 entsprechen. Die beiden Klemmschalen 6 und 7 umschließen zusammen die Kopfstützenstange 3.

An der hinteren Klemmschale 7 ist über einen Z-förmig nach oben und nach vorne abgewinkelten Trägerarm 9 eine hintere Platte 11 angebracht. Die hintere Platte 11 hat die Form eines auf seiner Spitze stehenden, gleichschenkeligen Dreiecks. An der vorderen Klemmschale 6 ist eine vordere Platte 12 angebracht, die ebenfalls die Form eines auf seiner Spitze stehenden, gleichschenkeligen Dreiecks aufweist, wobei die vordere Platte 12 mit den oberen Ecken deckungsgleich zur hinteren Platte 11 und mit der unteren Spitze tiefer liegend zur hinteren Platte 11 angeordnet ist. Ein gerader Haltearm 14 steht von der vorderen Platte 12 ungefähr von deren Schwerpunkt aus nach hinten ab und ragt durch eine entsprechende Führung in der hinteren Platte 11 auf deren Rückseite. Der Haltearm 14 verläuft senkrecht zur Teilungsebene der beiden Klemmschalen 6 und 7.

Zwischen den beiden oberen Ecken und der unteren Spitze der vorderen Platte 12 einerseits und den beiden oberen Ecken der hinteren Platte 11 bzw. dem Trägerarm 9 andererseits ist jeweils eine Feder 16 vorgesehen. Die drei als Schraubenfedern ausgebildeten Federn 16 sind mit ihren Enden jeweils in runden Aufnahmen im Bereich der genannten Ecken und Spitzen angeordnet und befestigt. Im Gebrauchszustand der Kopfstütze 1 sind die drei Federn 16 vollständig zusammengedrückt. Da die beiden oberen Federn 16 zusammen ein größeres Drehmoment als die untere Feder 16 aufbringen, wird die hebelartig auf dem Haltearm 14 gelagerte vordere Platte 12 mit der an der unteren Spitze angeordneten vorderen Klemmschale 6 gegen die hintere Klemmschale 7 gedrückt. Die dadurch entstehende Klemmwirkung hält den Kopfstützenkörper 5 in seiner Neigung relativ zur Kopfstützenstange 3.

Auf der nach hinten weisenden Rückseite des Trägerarms 9 ist ein keulenförmiger Entriegelungshebel 19 mit seinem unteren Ende angelenkt, wobei die Schwenkachse horizontal verläuft. Mit seinem freien Ende weist der Entriegelungshebel 19 nach oben. Durch eine entsprechende Materialeinlage befindet sich der Schwerpunkt des Entriegelungshebels 19 im Bereich dieses freien oberen Endes. Auf der nach hinten weisenden Rückseite der hinteren Platte 11 ist eine dreieckige Auslöseplatte 21 an ihrer oberen Ecke angelenkt. Die Schwenkachse der Auslöseplatte 21 verläuft parallel zur Schwenkachse des Entriegelungshebels 19. An ihrer unteren Ecke ist die Auslöseplatte 21 über einen Mitnahmebügel 23 am Entriegelungshebel 19 gelenkig angebracht, und zwar etwas unterhalb seiner Mitte. An ihrer hinteren Ecke steht von der Auslöseplatte 21 ein Entriegelungsbolzen 25 horizontal ab. Im Gebrauchszustand der Kopfstütze 1 liegt der Entriegelungsbolzen 25 in einer nach oben offenen Raste 14' des Haltearms 14 und legt den Haltearm 14 dadurch fest. Als Folge davon wird die vordere Platte 12 in Anlage an die hintere Platte 11 gehalten. Der gesamte Kopfstützenkörper 5 ist von einem Polster und einem Bezug überzogen, welche in der Zeichnung nur angedeutet sind.

Im Falle eines Heckcrashs wird die Struktur des Kraftfahrzeuges nach vorne beschleunigt. Auf den Schwerpunkt des Entriegelungshebels 19 wirkt diese Beschleunigung erst verzögert, da dieser aufgrund der Trägheit seiner Masse in seinem Bewegungszustand verharrt. Im Bezugssystem der Kopfstütze 1 betrachtet, wird daher dieser Schwerpunkt nach hinten beschleunigt. Aufgrund seiner Anlenkung am Trägerarm 9 beginnt der Entriegelungshebel 19 mit einer Schwenkbewegung. Der Entriegelungshebel 19 nimmt den Mitnahmebügel 23 mit, welcher wiederum die Auslöseplatte 21 bewegt. Die nach oben schwenkende Auslöseplatte 21 bewegt den Entriegelungsbolzen 25 aus der Raste 14' heraus, so daß der Haltearm 14 frei gegeben wird. Die Federn 16 drücken die vordere Platte 12 mit samt der vorderen Klemmschale 6 nach vorne von der hinteren Platte 11 und der hinteren Klemmschale 7 weg. Dadurch wird die Klemmwirkung aufgehoben. Aufgrund der Reaktionskraft der sich an der hinteren Platte 11 abstützenden Federn 16 und aufgrund der Trägheitskraft der hinteren Platte 11 schwenkt die nunmehr gelöste hintere Platte 11 auf dem Trägerarm 9 relativ zur Kopfstützenstange 3 nach hinten. Zwei an der Kopfstützenstange 3 fest angebrachte, seitliche, nach oben abstehende Anschläge 27 fangen nach etwa 20° die Bewegung der hinteren Platte 11 ab.

Durch das Schwenken der hinteren Platte 11 und durch die Bewegung der als Prallkörper wirkenden vorderen Platte 12 nach vorne wird das Polster der Kopfstütze 1 näher an den Kopf des Sitzbenutzers gebracht, um ein Schleudertrauma (HWS-Syndrom) zu vermeiden. Die vordere Platte 12 kann so ausgebildet sein, daß sie in der ausgefahrenen Stellung selbsttätig verriegelt. Sofern die Kopfstütze 1 durch den Crash nicht beschädigt wird, kann die Kopfstütze 1 wieder reversibel in den Ausgangszustand gebracht werden. Unter Spannen der Federn 16 werden die vordere Platte 12 und die hintere Platte 11 zusammengedrückt, bis der Entriegelungsbolzen 25 in der Raste 14' zu liegen kommt.

Im Falle eines Frontcrashs wird der Entriegelungshebel 19 gegen die hintere Platte 11 gedrückt, so daß der Haltearm 14 verriegelt bleibt.

Im zweiten Ausführungsbeispiel beziehen sich die Richtungsangaben ebenfalls auf die Anordnung des Fahrzeugsitzes in einem Kraftfahrzeug und dessen gewöhnliche Fahrtrichtung (x-Richtung). Eine Kopfstütze 101 für einen Fahrzeugsitz weist zwei parallele Kopfstützenstangen 103 auf, die mit ihren vertikal nach unten weisenden Endabschnitten in Aufnahmen des Fahrzeugsitzes gesteckt sind und die im Bereich ihrer oberen Endabschnitte mit einer Quertraverse 103' verbunden sind. Ein gepolsterter Kopfstützenkörper 105, der auf der Quertraverse 103' angeordnet und in y-Richtung spiegelsymmetrisch aufgebaut ist, weist die im folgenden beschriebenen Teile auf.

Ein plattenförmiger Prallkörper 112 von ungefähr rechteckförmigem Grundriß (Prallelement) ist entlang einer Seite an der Quertraverse 103' um eine etwas unterhalb und in x-Richtung vor derselben angeordnete Drehachse drehbar gelagert. In einer Gebrauchsstellung ist der Prallkörper 112 aufrecht nach oben gestellt und etwas vor der Querstange 103' angeordnet. Links und rechts ist je ein bolzenförmiger Haltearm 114 auf der Rückseite des Prallkörpers 112 angelenkt, horizontal ausgerichtet und weist entgegen der x-Richtung nach hinten. Jeder Haltearm 114 ist jeweils in einer weitgehend rinnenförmigen, überwiegend nach oben offenen Führung 115 auf der Quertraverse 103' geführt. Zwischen einem Flansch am Haltearm 114 im Bereich der Anlenkstelle an den Prallkörper 112 und der Führung 115 ist jeweils eine Feder 116 vorgesehen, welche den Prallkörper 112 im Gebrauchszustand der Kopfstütze 101 nach vorne vorspannt.

Auf der Quertraverse 103' ist parallel zu dieser eine längliche Auslösemasse 119 angeordnet, welche drehbar gelagert ist und um eine zur Quertraverse 103' parallele Drehachse 119' schwenkbar ist. Im Gebrauchszustand der Kopfstütze 101 ist die Auslösemasse 119 oberhalb ihrer Drehachse 119' angeordnet. Je ein abgewinkelter Trägerarm 121 steht seitlich vom linken bzw. rechten Ende der Auslösemasse 119 ab, verläuft zunächst in x-Richtung und dann nach links (y-Richtung) bzw. rechts, und trägt an seinem Ende einen nach unten (entgegen der z-Richtung) weisenden Riegel 125. Im Gebrauchszustand der Kopfstütze 101 liegt jeder Riegel 125 in einer (vorzugsweise der vordersten) von mehreren nach oben offenen Rasten 114' des entsprechenden Haltearms 114 und legt den ihm zugeordneten Haltearm 114 dadurch fest. An dem vom Prallkörper 112 abgewandten Ende jedes Haltearms 114 weist dieser im Abstand vom hinteren Ende der Führung 115 einen flanschartigen Anschlag 127 auf, beispielsweise eine Unterlegscheibe, die am Haltearm 114 stirnseitig angeschraubt ist. Der gesamte Kopfstützenkörper 105 ist von einem Polster und einem Bezug überzogen, welche in der Zeichnung nicht dargestellt sind.

Im Falle eines Heckcrashs wird die Struktur des Kraftfahrzeuges nach vorne beschleunigt. Auf den Schwerpunkt der Auslösemasse 119 wirkt diese Beschleunigung erst verzögert, d.h. im Bezugssystem der Kopfstütze 101 wird dieser Schwerpunkt nach hinten beschleunigt. Aufgrund der drehbaren Lagerung beginnt die Auslösemasse 119 mit einer nach hinten gerichteten Schwenkbewegung um die Drehachse 119'. Dadurch hebt sie über die beiden Trägerarme 121 die Riegel 125 nach oben aus den Rasten 114' heraus, so daß die Haltearme 114 frei gegeben werden. Die als Betätigungsfedern wirkenden Federn 116 entspannen sich und drücken die zugehörigen Haltearme 114 mit samt dem daran angebrachten Prallkörper 112 nach vorne. Der Prallkörper 112 schwenkt dadurch soweit nach vorne, bis die Anschläge 127 in Anlage an die Führungen 115 kommen. Die Riegel 125 können dann in weiter hinten gelegene Rasten 114' des Haltearms 114 einfallen.

Durch die Schwenkbewegung des Prallkörpers 112 wird das Polster der Kopfstütze 101 näher an den Kopf des Sitzbenutzers gebracht. Sofern die Kopfstütze 101 durch den Crash nicht beschädigt wird, kann, gegebenenfalls nach Ausheben der Riegel 125, unter Spannen der Federn 116 der Prallkörper 112 wieder zurückgedrückt werden, bis die Haltearme 114 erneut verriegelt werden. Im Falle eines Frontcrashs drückt die Auslösemasse 119 den Riegel 125 gegen die Raste 114', so daß sich die Verriegelung nicht öffnet.

Im dritten Ausführungsbeispiel beziehen sich die Richtungsangaben auf das gleiche Bezugssystem. Eine Kopfstütze 201 für einen Fahrzeugsitz weist zwei parallele Kopfstützenstangen 203 auf, die mit ihren vertikal nach unten weisenden Endabschnitten in Aufnahmen des Fahrzeugsitzes gesteckt sind und die in ihren oberen Endabschnitten mit einer Quertraverse 203' verbunden sind. Parallel zur Quertraverse 203' und oberhalb derselben erstreckt sich eine Achse 204 zwischen den beiden Kopfstützenstangen 203 und ist in diesen gelagert. Ein gepolsterter Kopfstützenkörper 205, welcher die Quertraverse 203', die Achse 204 und die nachfolgenden Teile umschließt, ist in der Zeichnung nur angedeutet.

Ein plattenförmiger Prallkörper 212 von ungefähr rechteckförmigem Grundriß mit abgerundeten Kanten ist im vorderen Bereich des Kopfstützenkörpers 205 angeordnet. Der Prallkörper 212 (Prallelement) ist auf der Rückseite ungefähr in deren Mitte an zwei Enden eines H-förmigen oberen Hebels 214 mittels oberer Zapfen 214' angelenkt. Der obere Hebel 214 ist mit seinen beiden anderen Enden auf der Achse 204 gelagert. Eine Drehfeder 216 spannt den oberen Hebel 214 nach vorne (x-Richtung) und oben (z-Richtung) vor. Die Quertraverse 203' weist auf der Vorderseite zwei parallel zur Achse 204 angeordnete Lagerstellen 217 auf, in denen ein U-förmiger unterer Hebel 218 im Bereich seiner Endabschnitte schwenkbar gelagert ist. An seinem mittleren Abschnitt ist mittels Zapfen 218' der Prallkörper 212 in seinem unteren Bereich angelenkt. Der Prallkörper 212, der obere Hebel 214, die Kopfstützenstangen 203 und der untere Hebel 218 bilden ein Viergelenk.

Eine zylindrisch geformte Auslösemasse 219 ist etwas unterhalb der Quertraverse 203' in einer an der Quertraverse 203' befestigten Führung 219' in x-Richtung beweglich angeordnet. Auf der Rückseite der Auslösemasse 219 ist ein Übertragungsglied 223 angelenkt, welches durch eine Öffnung in der Rückwand der Führung 219' ragt und an einem oberhalb desselben angeordneten, L-förmigen Verriegelungshebel 225 angelenkt ist. Der Verriegelungshebel 225 ist auf einem quertraversenfesten Bolzen 225' parallel zur Achse 204 schwenkbar gelagert. An seinem nach vorne weisenden, vom Übertragungsglied 223 abgewandten Ende weist der Verriegelungshebel 225 einen Haken auf, mit dem er im Gebrauchszustand der Kopfstütze 201 den oberen Hebel 214 entgegen der Kraft der Drehfeder 216 nach unten geschwenkt hält. Eine um das Übertragungsglied 223 herum, zwischen der Rückwand der Führung 219' und der Auslösemasse 219 angeordnete Rückstellfeder 223' spannt die Auslösemasse 219 in x-Richtung nach vorne so weit vor, bis der Verriegelungshebel 225 an der Führung 219' anliegt.

Im Falle eines Heckcrashs wird die Struktur des Kraftfahrzeuges nach vorne beschleunigt. Auf den Schwerpunkt der Auslösemasse 219 wirkt diese Beschleunigung erst verzögert, d.h. im Bezugssystem der Kopfstütze 201 wird dieser Schwerpunkt nach hinten beschleunigt. Die Auslösemasse 219 bewegt sich daher entgegen der Kraft der Rückstellfeder 223' nach hinten und drückt über das Übertragungsglied 223 gegen den Verriegelungshebel 225. Der Verriegelungshebel 225 schwenkt um den Bolzen 225' nach unten und hinten, so daß er den oberen Hebel 214 freigibt. Die Drehfeder 216 kann dadurch den oberen Hebel 214, und aufgrund der Ausbildung als Viergelenk auch den unteren Hebel 218, rasch nach oben und vorne schwenken. Der Prallkörper 212 bewegt sich dadurch um jeweils ca. 70 mm nach oben und vorne, also näher an den Kopf des Sitzbenutzers heran.

Die Bewegung des oberen Hebels 214 wird nach 90° durch zwei Anschläge 227 an den Kopfstützenstangen 203 begrenzt, so daß der obere Hebel 214 dann senkrecht von den Kopfstützenstangen 203 nach vorne absteht. Um Verletzungen zu verringern, wird diese Endposition nach erfolgtem Heckcrash durch einen mittels einer nicht dargestellten Feder vorgespannten Arretierungsstift 229 gesichert, der dann in eine sacklochförmige Arretierungsbohrung 231 im oberen Hebel 214 einfällt. Die Auslösemasse 219 und der Verriegelungshebel 225 werden durch die Rückstellfeder 223' in ihre Ausgangsposition gebracht. Soweit die aktivierte Kopfstütze 201 durch den Crash nicht beschädigt worden ist, kann nach Ziehen des federbelasteten Arretierungsstiftes 229 aus der Arretierungsbohrung 231 der Prallkörper 212 entgegen der Kraft der Drehfeder 216 nach unten und hinten geschwenkt werden. Beim Erreichen der Gebrauchsstellung verriegelt der Verriegelungshebel 225 wieder den oberen Hebel 214. Ein Frontcrash bewirkt keine Entriegelung, da dann der Verriegelungshebel 225 eine Vorwärtsbewegung der Auslösemasse 219 verhindert.

Für das vierte Ausführungsbeispiel gilt ein entsprechendes Bezugssystem. Eine Kopfstütze 301 weist innerhalb eines Kopfstützenkörpers 305 eine hintere Platte 311, welche aufrecht an den nicht dargestellten Kopfstützenstangen angeordnet ist, und eine davor angeordnete vordere Platte 312 auf, welche als Prallkörper (Prallelement) wirkt und durch die nachfolgend beschriebenen Bauteile relativ zur hinteren Platte 311 beweglich ist. Die an den Platten 311 und 312 angebrachte Polsterung ist der Übersichtlichkeit halber nicht näher dargestellt.

Ein Hebelsystem besteht aus zwei Wellen 332, die vertikal (in z-Richtung) links bzw. rechts der Mitte der hinteren Platte 311 angeordnet und in je zwei Lagern 335 gelagert sind, welche auf der Vorderseite der hinteren Platte 311 angebracht sind, und aus vier stabförmigen Hebeln 338, von denen je zwei mit einem Ende an einer der Wellen 332 in verschiedenen Höhen fest angebracht sind und die an ihrem freien Ende je einen zur Welle 332 parallelen Querbolzen 340 aufweisen. Im Gebrauchszustand der Kopfstütze 301 sind die Hebel 338 in der Art von gefalteten Händen aufeinander zu geschwenkt und daher alle in bzw. entgegen der y-Richtung ausgerichtet.

Am unteren Ende der beiden Wellen 332 weisen diese jeweils ein drehfest angebrachtes, etwas mehr als viertelskreisförmiges Zahnradsegment 342 auf, dessen Mittelpunkt mit der jeweiligen Welle 332 zusammenfällt. Die beiden Zahnradsegmente 342 greifen ineinander. Am linken Zahnradsegment 342 ist auf dessen Unterseite durch eine zapfenförmige Einspannstelle ein Schenkel einer Drehfeder 344 (Schenkelfeder) durchgeführt und wird zum Längenausgleich beweglich gehalten. Die Drehfeder 344 ist auf einen parallel zur Welle 332 verlaufenden Dorn des nächsten, oberhalb des linken Zahnsegmentes 342 angeordneten Lagers 335 aufgewickelt. Die Drehfeder 344 erstreckt sich bis zu diesem Lager 335 und ist dort mit ihrem anderen Ende an einer festen Einspannstelle befestigt. Die Drehfeder 344 spannt das linke Zahnradsegment 342 nach vorne vor, wobei im Gebrauchszustand der Kopfstütze 301 eine später genauer beschriebene Verriegelung ein Schwenken des linken Zahnradsegmentes 342 verhindert. Das rechte Zahnradsegment 342 ist außer über die rechte Welle 332 durch einen parallel dazu angeordneten Verbindungsbolzen 346 mit dem untersten Hebel 338 verbunden.

Links und rechts der vorderen Platte 312 schließt sich je ein Griff 348 an. Der linke und der rechte Griff 348 weisen auf der zur vorderen Platte 312 hin gewandten Seite vier bzw. drei Stäbe 350 auf, die jeweils in Richtung des anderen Griffes 348 zeigen und an ihren Enden mit Haken versehen sind. Zwei Stäbe 350 jedes Griffes 348 sind mit den gegenüberliegenden Stäben 350 durch eine Zugfeder 352 oder ein elastisches Band verbunden. Alle Stäbe 350 sind in Nuten geführt, welche auf der Rückseite der vorderen Platte 312 ausgebildet sind und in y-Richtung verlaufen. In diesen Nuten werden ein oder zwei Stäbe 350 sowie zugleich ein Querbolzen 340 geführt. Die Nuten sind als T-förmige Gleitführungen ausbildet, so daß die Querbolzen 340 durch entsprechende Materialpartien hintergriffen werden. Die Haken an den Enden der Stäbe 350 liegen an den Querbolzen 340 an.

Die Verriegelung besteht aus einem Stiftgehäuse 355, welches oberhalb des linken Zahnradsegmentes 342 angeordnet und mit der hinteren Platte 311 verbundenen ist, aus einem Stift 357, welcher innerhalb des Stiftgehäuses 355 in z-Richtung beweglich geführt ist, und aus einer ersten Druckfeder 359 (Rückstellfeder), welche den Stift 357 nach unten durch eine Öffnung auf der Unterseite des Stiftgehäuses 355 drückt, so daß dieser in eine im verriegelten Gebrauchszustand der Kopfstütze 301 unterhalb des Stiftgehäuses 355 befindliche Bohrung des linken Zahnradsegmentes 342 greift. Am oberen Ende des Stiftes 357 ist die Seele eines Bowdenzuges 361 befestigt, der sich mit seiner Hülle am Stiftgehäuse 355 abstützt.

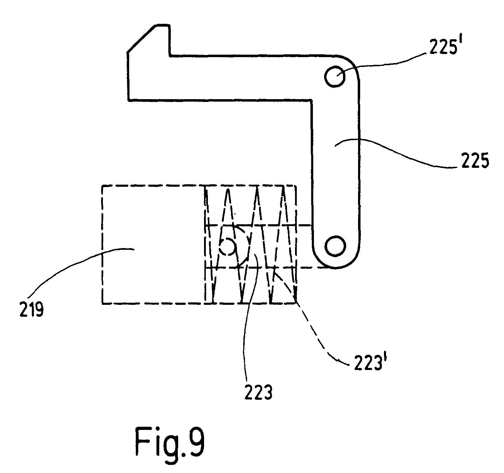

Der Bowdenzug 361 ist zu einem innerhalb der Kopfstütze 301 oder anderswo am Fahrzeugsitz angebrachten Massensensor geführt. Der Massensensor weist ein Sensorgehäuse 363 auf, an dem die Hülle des Bowdenzuges 361 abgestützt ist. Die Seele des Bowdenzuges 361 ist von vorne in das Sensorgehäuse 363 geführt und dort an einer kugelförmigen Auslösemasse 365 befestigt. Die Auslösemasse 365 ist innerhalb des Sensorgehäuses 363 beweglich geführt. Eine schwache, zweite Druckfeder 367 (Rückstellfeder) ist auf der vom Bowdenzug 361 abgewandten Seite der Auslösemasse 365 im hinteren Bereich des Sensorgehäuses 363 vorgesehen. Die zweite Druckfeder 367 spannt die Auslösemasse 365 leicht nach vorne vor. In einer Abwandlung können die Verriegelung und der Massensensor wie im dritten Ausführungsbeispiel, d.h. entsprechend der in Fig. 9 gezeigten Weise, ausgebildet sein.

Im Falle eines Heckcrashs bleibt die Auslösemasse 365 zurück, zieht dadurch am Bowdenzug 361, welcher wiederum den Stift 357 zieht, so daß die Verriegelung sich löst. Die Drehfeder 344 dreht sich im Windungssinn auf und schwenkt dabei das linke Zahnsegment 342 nach vorne, welches über seine Verzahnung das rechte Zahnsegment 342 mitnimmt. Die beiden Zahnsegmente 342 drehen die Wellen 332, welche wiederum die Hebel 338 nach vorne schwenken. Ein an jeder Lagerstelle 335 ausgebildeter Anschlag beschränkt die Schwenkbewegungen auf etwa 100°, so daß die Hebel 338 über ihren vorderen Totpunkt (bei 90°) hinaus gelangen. Durch die Schwenkbewegungen der Hebel 338 wird die vordere Platte 312 um ca. 70 mm nach vorne gedrückt, so daß sie mit ihrer Polsterung näher an den Kopf des Benutzers herankommt. Die Querbolzen 340 bewegen sich dabei innerhalb der Nuten der vorderen Platte 312 und schieben über die Haken der Stäbe 350 die Griffe 348 nach außen.

Sofern die Kopfstütze 301 nicht beschädigt ist, können nach dem Crash mit Unterstützung durch die Zugfedern 352 die Griffe 348 zusammengeschoben werden, welche über die Stäbe 350 auf die Querbolzen 340 drücken. Dadurch schließen sich die Hebel 338 und drehen die Wellen 332, welche die Zahnsegmente 342 schwenken, so daß die Drehfeder 344 wieder gespannt wird. Die beiden Druckfedern 359 und 367 sorgen dafür, daß die Auslösemasse 365 ihre vordere Position einnimmt und der Stift 357 das linke Zahnsegment 342 verriegelt. Die Ausgangsstellung für den Gebrauch der Kopfstütze 301 ist dadurch wieder erreicht.

### Bezugszeichenliste

- 1, 101, 201, 301: Kopfstütze
- 3, 103, 203: Kopfstützenstange
- 5, 105, 205, 305: Kopfstützenkörper
- 6: vordere Klemmschale
- 7: hintere Klemmschale
- 9: Trägerarm
- 11, 311: hintere Platte
- 12, 112, 212, 312: vordere Platte, Prallkörper
- 14, 114: Haltearm
- 14', 114': Raste
- 16, 116: Feder
- 19, 119, 219: Entriegelungshebel, Auslösemasse
- 21: Auslöseplatte
- 23: Mitnahmebügel
- 25, 125: Entriegelungsbolzen
- 27, 127, 227: Anschlag
- 103', 203': Quertraverse
- 115: Führung
- 119': Drehachse
- 121: Trägerarm
- 204: Achse
- 214: oberer Hebel
- 214': oberer Zapfen
- 216: Drehfeder
- 217: Lagerstelle
- 218: unterer Hebel
- 218': unterer Zapfen
- 219': Führung
- 223: Übertragungsglied
- 223': Rückstellfeder
- 225: Verriegelungshebel
- 225': Bolzen
- 229: Arretierungsstift
- 231: Arretierungsbohrung
- 332: Welle
- 335: Lager
- 338: Hebel
- 340: Querbolzen
- 342: Zahnradsegmente
- 344: Drehfeder
- 346: Verbindungsbolzen
- 348: Griff
- 350: Stab
- 352: Zugfeder
- 355: Stiftgehäuse
- 357: Stift
- 359: erste Druckfeder
- 361: Bowdenzug
- 363: Sensorgehäuse
- 365: Auslösemasse
- 367: zweite Druckfeder

## Patentansprüche

1. Kopfstütze für einen Fahrzeugsitz, insbesondere für einen Kraftfahrzeugsitz, mit einer Kopfstützenstange (3; 103; 203), welche einen Kopfstützenkörper (5; 105; 205; 305) trägt, dadurch gekennzeichnet, daß ein Teil (12; 112; 212; 312) des Kopfstützenkörpers (5; 105; 205; 305) sich im Crashfall relativ zu dem übrigen Kopfstützenkörper (5; 105; 205; 305) nach vorne bewegt.

2. Kopfstütze nach Anspruch 1, dadurch gekennzeichnet, daß die Trägheit einer Masse (19; 119; 219; 365) die Bewegung des nach vorne beweglichen Teiles (12; 112; 212; 312) des Kopfstützenkörpers (5; 105; 205; 305) auslöst.

3. Kopfstütze nach Anspruch 2, dadurch gekennzeichnet, daß die Masse (19; 119; 229; 364) in die Kopfstütze (1; 101; 201; 301) integriert ist.

4. Kopfstütze nach Anspruch 2 oder 3, dadurch gekennzeichnet, daß im Crashfall die Masse (19; 119; 219; 365) eine Bewegung ausführt und dabei zwangsläufig eine Verriegelung (14', 25; 114', 125; 214, 225) öffnet, welche das nach vorne bewegliche Teil (12; 112; 212; 312) in Anlage an den übrigen Kopfstützenkörper (5; 105; 205; 305) hält.

5. Kopfstütze nach einem der Ansprüche 1 bis 4, dadurch gekennzeichnet, daß wenigstens eine Feder (16; 116; 216; 344) vorgesehen ist, welche den nach vorne beweglichen Teil (12; 112; 212; 312) im Gebrauchszustand der Kopfstütze (1; 101; 201; 301) vorspannt.

6. Kopfstütze nach Anspruch 4 und 5, dadurch gekennzeichnet, daß nach dem Öffnen der Verriegelung (14', 25; 114', 125; 214, 225) die Feder (16; 116; 216; 344) sich entspannt und den nach vorne beweglichen Teil (12; 112; 212; 312) des Kopfstützenkörpers (5; 105; 205; 305) bewegt.

7. Kopfstütze nach einem der Ansprüche 1 bis 6, dadurch gekennzeichnet, daß der Kopfstützenkörper (5) in seiner Neigung einstellbar ist und, wobei sich im Crashfall die Neigung des Kopfstützenkörpers (5) ändert.

8. Kopfstütze nach Anspruch 7, dadurch gekennzeichnet, daß der Kopfstützenkörper (5) durch Kraftschluß in seiner eingestellten Neigung auf einer Kopfstützenstange (3) gehalten wird, und im Crashfall sich der Kraftschluß verringert.

9. Kopfstütze nach Anspruch 5 oder 6 und Anspruch 8, dadurch gekennzeichnet, daß der Kopfstützenkörper (5) im Bereich der Kopfstützenstange (3) zwei Klemmschalen (6, 7) aufweist, von denen eine an dem nach vorne beweglichen Teil (12) des Kopfstützenkörpers (5) angeordnet ist, und die Feder (16) im Gebrauchszustand der Kopfstütze (1) ein resultierendes Drehmoment ausübt, welches die beiden Klemmschalen (6, 7) unter Bildung des Kraftschlusses zusammendrückt.

10. Kopfstütze nach einem der Ansprüche 1 bis 8, dadurch gekennzeichnet, daß im Falle eines Heckcrashs wenigstens ein Teil (9, 11) des Kopfstützenkörpers (5) nach hinten schwenkt.

11. Kopfstütze nach einem der Ansprüche 1 bis 10, dadurch gekennzeichnet, daß der nach vorne bewegliche Teil (112; 212) des Kopfstützenkörpers (105; 205) wenigstens teilweise eine Schwenkbewegung ausführt.

12. Kopfstütze nach Anspruch 4, dadurch gekennzeichnet, daß wenigstens ein Riegel (125) der Verriegelung (114', 125) an der Masse (119) angebracht ist und im Crashfall eine Schwenkbewegung ausführt.

13. Kopfstütze nach einem der Ansprüche 1 bis 12, dadurch gekennzeichnet, daß der nach vorne bewegliche Teil (212; 312) des Kopfstützenkörpers (205; 305) durch wenigstens einen eine Schwenkbewegung ausführenden Hebel (214; 338) bewegt wird.

14. Kopfstütze nach Anspruch 13, dadurch gekennzeichnet, daß der nach vorne bewegliche Teil (212) des Kopfstützenkörpers (205) über ein bewegliches Viergelenk (212, 214, 203, 218) mit dem anderen Teil des Kopfstützenkörpers (205) verbunden ist.

15. Kopfstütze nach Anspruch 13, dadurch gekennzeichnet, daß mehrere schwenkbare Hebel (338) vorgesehen sind, welche mit einem Ende in dem nach vorne beweglichen Teil (312) geführt sind und durch ihre Schwenkbewegungen eine translatorische Bewegung des beweglichen Teiles (312) bewirken.

16. Kopfstütze nach Anspruch 13 oder 15, dadurch gekennzeichnet, daß die Hebel (338) weitere Elemente (348) seitlich nach außen bewegen.
